# EUROPEAN PATENT APPLICATION

(11) **EP 1 956 397 A1**
(43) Date of publication of application: **13.08.2008**
(21) Application number: 08001401.2
(22) Date of filing: 25.01.2008
(51) Int. Cl.: G02B 3/00, H01L 33/00

(54) **Lens member**

(30) Priority: 07.02.2007 JP 2007028195
(71) Applicant: Funai Electric Co., Ltd., Daito-shi, Osaka 574-0031 (JP)
(72) Inventor: Sugamura, Tomokazu, Daito-shi Osaka 574-0013 (JP)
(74) Representative: Erny, Tobias

(57) **Abstract**

A lens member 3, which is disposed behind an LED display part 2 formed as a small rectangular hole in a front wall of a cabinet 1 of a display device, includes a plate-like substrate part 3a, a light receiving part 3b formed on a back surface of the substrate part like a spherical recess, and a light condensing part 3e formed integrally on a front surface of the substrate part 3a so as to be opposed to the light receiving part 3b, having a tip engaging the LED display part 2. The light condensing part 3e rises from the front surface of the substrate part 3a with inclination having a rectangular section at a lower end covering the light receiving part 3b.

## Description

### BACKGROUND OF THE INVENTION

### Field of the Invention

The present invention relates to a lens member disposed at an LED display part for displaying a state of ON or OFF of a power supply or a standby state with red color or green color. More specifically, the invention relates to a lens member for condensing light emitted from a LED lamp efficiently so that the light can be diffused from its tip having a rectangular shape.

### Description of Related Art

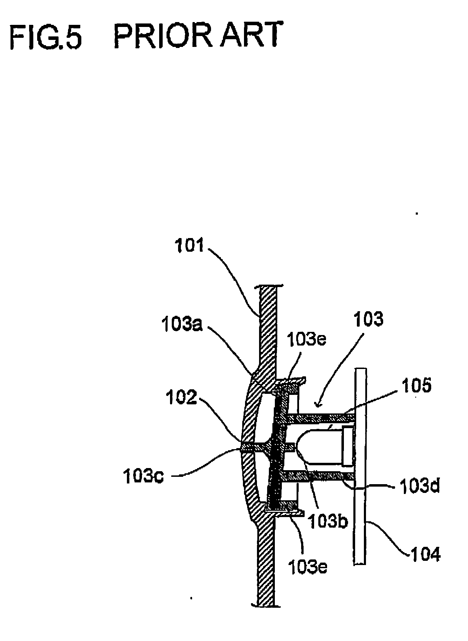

A conventional lens member will be described with reference to Fig. 5. Fig. 5 is a longitudinal section showing an LED display part and its periphery of a conventional television receiver.

The front surface of a cabinet 101 of the television receiver is provided with an LED display part 102 for displaying a state of ON or OFF of a power supply or a standby state with lighting. The LED display part 102 is formed as a small rectangular hole passing through the front surface of the cabinet 101.

A lens member 103 made of a transparent resin such as acrylic resin is disposed behind the LED display part 102 inside the cabinet 101. The lens member 103 includes a plate-like substrate part 103a having fixing pieces 103e extending backward from the upper and lower rim parts, a prism-like light receiving part 103b and a light condensing part 103c protruding respectively from back and front surfaces of the substrate part 103a integrally, and a cylindrical lamp housing part 103d provided integrally on the back surface of the substrate part 103 a so as to cover the light receiving part 103b. A tip of the light condensing part 103c is engaged with the rectangular hole of the LED display part 102 of the cabinet 101 from rear, and the tip surface is substantially flush with the front surface of the cabinet 101.

A substrate 104 on which an LED lamp 105 is mounted is disposed behind the lens member 103. The LED lamp 105 is inserted into the lamp housing part 103d of the lens member 103 from rear and is housed inside the same. The LED lamp 105 has light emission elements of red color for a power LED display part and green color for a standby LED display part, in accordance with a type of the LED display parts 102.

In this state, if a power button (not shown) of the television receiver is pressed for example, a part of the red light emitted radially from the red color LED lamp 105 enters the light receiving part 103b from its end surface (light receiving surface). The light that propagates in the light condensing part 103c is reflected by upper, lower, left and right walls of the light condensing part 103c repeatedly, and is condensed on the tip surface (light emitting surface) to be emitted. Thus, the LED display part 102 glows in red color, so that a viewer can see that the television receiver is powered on.

However, the conventional lens member 103 has the following problem. Since the light receiving surface of the light receiving part 103b has the rectangular shape that is smaller than the LED lamp 105, so only a very little part of the light emitted from the round LED lamp 105 can enter the light receiving part 103b. For this reason, luminance of the LED display part 102 is much less than luminance of the LED lamp 105. In addition, since the upper, lower, left and right walls of the light condensing part 103c that reflect the light are straight face without inclination, the light emitting surface cannot emit the light in wide angle even after repeated reflection by the walls. So, there is a problem that it is difficult for a viewer at a position apart from the front of the LED display part 102 to recognize the LED display part 102.

Furthermore, although JP-A-2005-303211, JP-A-2004-300797 and JP-A-2006-229055 disclose techniques concerning a lens part of a LED lamp that covers a light emission element, they don't relate to the above-mentioned lens member that is used as an individual body separated from the LED lamp.

### SUMMARY OF THE INVENTION

An object of the present invention is to provide a lens member for lighting the LED display part with high luminance and in wide angle without using an LED lamp having a wide angle of light spread (i.e., using an ordinary round LED lamp).

A lens member according to an embodiment of the present invention, which is disposed behind an LED display part formed as a small rectangular hole in a front wall of a cabinet of a display device, includes a plate-like substrate part, a light receiving part formed on a back surface of the substrate part like a spherical recess, and a light condensing part formed integrally on a front surface of the substrate part so as to be opposed to the light receiving part, having a tip engaging the LED display part. The light condensing part rises from the front surface of the substrate part with inclination having a rectangular section at a lower end covering the light receiving part

According to this structure, most of the light whose angle is widened by the light receiving part having an effect of a concave lens enters the light condensing part, Therefore, the light emitted from the LED lamp is condensed on the tip surface of the light condensing part efficiently. In addition, the upper, lower, left and right walls of the light condensing part of the lens member with inclination reflect the light repeatedly so that the angle of light is further widened. Therefore, the power LED display part can glow with high luminance and in wide angle without using an LED lamp having a wide angle of light spread (i.e., using an ordinary round LED lamp).

In addition, as to a lens member according to another embodiment of the present invention, side faces of the light condensing part have curved inclined surfaces so that the gradient increases as being close to the tip.

According to this structure, even if the protruding length of the light condensing part cannot be long enough, it is easy to secure a large area of the lower end of the light condensing part so that the light condensing part can be reinforced.

In addition, as to a lens member according to still another embodiment of the present invention, a tip surface of the light condensing part is provided integrally with a plurality of minute protrusions for diffusing light.

According to this structure, the light reaching the tip surface of the condensing part is diffused by the minute protrusions in random directions. Thus, viewability of the LED display part is further improved.

In addition, as to a lens member according to still another embodiment of the present invention, a plurality pairs of the light receiving part and the light condensing part are provided.

According to this structure, in the case where the LED display part consists of a plurality of display parts including a power LED display part, a standby LED display part and the like, it is possible to support the case easily without increasing the number of the lens members, since the lens member has a plurality pairs of the light receiving part and the light condensing part (optical units).

In addition, as to a lens member according to still another embodiment of the present invention, a light shield part is disposed integrally on the back surface of the substrate part between the neighboring light receiving parts.

According to this structure, the lights emitted from neighboring optical lamps having different colors are shielded by the light shield part so that mixture of different color lights can be prevented at the light receiving part

### BRIEF DESCRIPTION OF THE DRAWINGS

Fig. 1 is a perspective view showing a general appearance of a television receiver having a lens member according to an embodiment of the present invention.
Fig. 2 is a longitudinal section showing an LED display part and its periphery of the television receiver.
Fig. 3 is a perspective view from front of the lens member according to the embodiment
Fig. 4 is a perspective view from rear of the lens member according to the embodiment.
Fig. 5 is a longitudinal section showing an LED display part and its periphery of conventional television receiver.

### DETAILED DESCRIPTION OF THE PREFERRED EMBODIMENTS

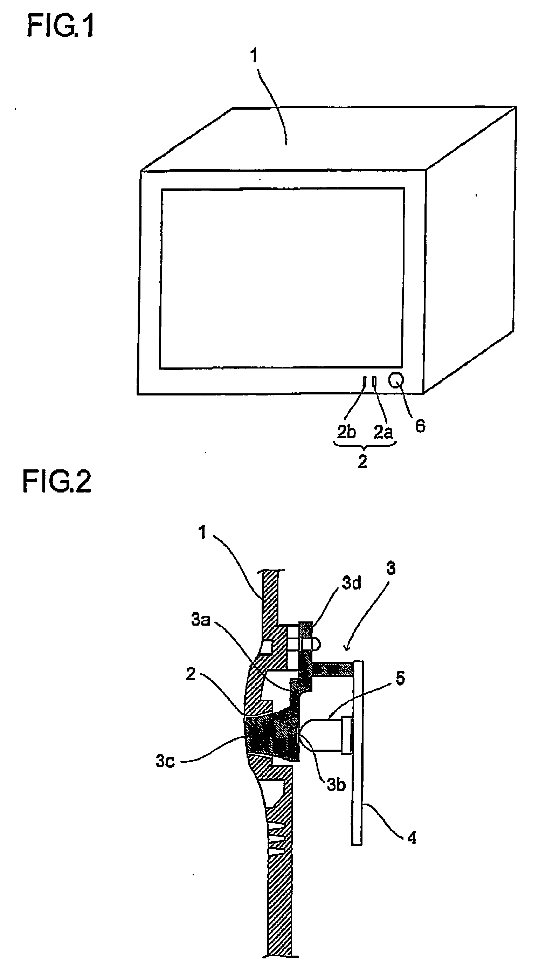

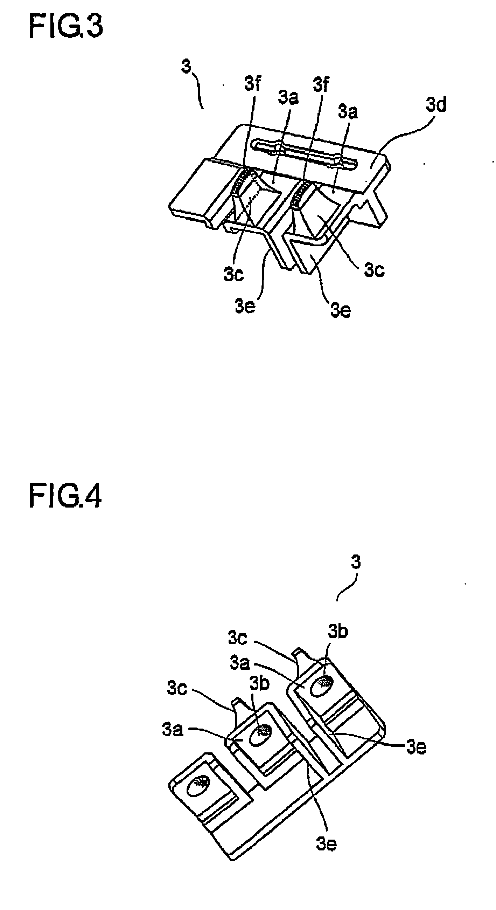

Hereinafter, a preferred embodiment of the present invention will be described with reference to the attached drawings. Fig. 1 is a perspective view showing a general appearance of a television receiver having a lens member according to an embodiment of the present invention. Fig. 2 is a longitudinal section showing an LED display part and its periphery of the television receiver. Figs. 3 and 4 are perspective views from front and rear respectively of the lens member according to the embodiment.

As shown in Fig. 1, a front surface of a cabinet 1 of the television receiver is provided with an LED display part 2 for displaying a state of ON or OFF of a power supply or a standby state with lighting, The LED display part 2 is formed as small rectangular holes that are elongated vertically and pass through the front surface of the cabinet 1. The LED display part 2 includes a power LED display part 2a and a standby LED display part 2b that are arranged side by side on the front surface of the cabinet 1.

As shown in Fig. 2, a lens member 3 made of a transparent resin such as acrylic resin is disposed behind the LED display part 2 inside the cabinet 1. As shown in Figs. 3 and 4, the lens member 3 includes a plate-like substrate part 3a, a light receiving part 3b formed on the back surface of the substrate part 3 a like a spherical recess, and a light condensing part 3c that is formed integrally on the front surface of the substrate part 3a and has a tip engaging the LED display part 2, which are formed as a single optical unit, and a flange part 3d that connects upper parts oftwo of the substrate parts 3a so that two of the optical units are arranged side by side. The flange part 3d is provided with a screw hole or the like for fixing the lens member 3 to the cabinet 1. The tip of the light condensing part 3c is engaged with the LED display part 2 from rear, and the tip surface is substantially flush with the front surface of the cabinet 1.

One of the two optical units of the lens member 3 (the right one in Fig.1) corresponds to the power LED display part 2a, and the other optical unit (the left one in Fig. 1) corresponds to the standby LED display part 2b.

As shown in Fig.1, a substrate 4 on which an LED lamp 5 is mounted is disposed behind the lens member 3. The tip of the LED lamp 5 is disposed close to the light receiving part 3b of the lens member 3. The LED lamp 5 has light emission elements of red color for the power LED display part 2a and green color for the standby LED display part 2b, in accordance with a position of the LED display part 2.

As shown in Figs. 3 and 4, light shield parts 3e extending toward rear are formed integrally to the two substrate parts 3a and 3a at the side edges that are close to each other, so that the lights emitted from neighboring LED lamps 5 having different colors are not mixed.

As shown in Fig. 3, the light condensing part 3c is disposed at a position on the front side of the substrate part 3a opposed to the light receiving part 3b on the rear side, and it has a shape similar to a quadrangular pyramid whose apex is cut off. More specifically, the light condensing part 3b has inclined upper, lower, left and right walls rising from the front surface of the substrate part 3a from a rectangular area covering the light receiving part 3b to smaller area of section as closing to the tip. In particular, the inclined walls of the light condensing part 3c of this embodiment have curved surfaces so that the area of section increases as being close to the substrate part 3a. According to this structure, even if the protruding length of the light condensing part 3c cannot be long enough, it is easy to secure a large area of the lower end of the light condensing part 3c so that the light condensing part 3c can be reinforced.

According to the above structure, if a power button 6 of the television receiver is pressed for example, red light emitted radially from the red color LED lamp 5 is almost received by the light receiving part 3b and enter the light condensing part 3c. On this occasion, the light receiving part 3b works like a concave lens for enlarging the angle of light spread. Since the lower end of the light condensing part 3c is widened so as to cover the light receiving part 3b on the front surface side of the substrate part 3a, most of the light whose angle is widened by the light receiving part 3b enters the light condensing part 3c. Therefore, the light emitted from the LED lamp 5 is condensed on the tip surface of the light condensing part 3c efficiently. Then, concerning the light path in the light condensing part 3c, the angle of light spread is further widened because the inclined walls of the light condensing part 3c reflect the light repeatedly.

According to the action described above, it is possible to make the power LED display part 2a glow with high luminance and in wide angle without using an LED lamp having a wide angle of light spread (i.e., using an ordinary round LED lamp). Note that the standby LED display part 2b has the same action and effect except for that its emission light has green color.

Furthermore, according to this embodiment, the tip surface of the light condensing part 3c is provided integrally with a plurality of minute protrusions 3f for diffusing light as shown in Fig. 3. According to this structure, the light reaching the tip surface of the condensing part 3c is diffused by the minute protrusions 3f in random directions. Thus, viewability of the LED display part 2 is further improved.

The present invention is not limited to the embodiment described above. For example, although the substrate part 3a is divided into the left and the right parts so that the optical units of the lens member 3 correspond to the power LED display part 2a and the standby LED display part 2b respectively in the embodiment described above, the substrate part may not have the divided structure as described above but may be made of a single plate that is continuous laterally. In other words, a plurality of pairs of the light receiving part and the light condensing part may be disposed as optical units in the longitudinal direction (lateral direction) of the substrate part. In this case, the light shield part for preventing mixture of different color lights may be formed so as to separate between the neighboring light receiving parts on the back surface of the substrate part. According to this structure, cost for making a die can be reduced, so that the lens member of the present invention can be provided at low cost.

## Claims

1. A lens member disposed behind an LED display part formed as a small rectangular hole in a front wall of a cabinet of a display device, the lens member comprising;
a plate-like substrate part;
a light receiving part formed on a back surface of the substrate part like a spherical recess; and
a light condensing part formed integrally on a front surface of the substrate part so as to be opposed to the light receiving part, the light condensing part having a tip engaging the LED display part, wherein
the light condensing part rises from the front surface of the substrate part with inclination having a rectangular section at a lower end covering the light receiving part.

2. The lens member according to claim 1, wherein side faces of the light condensing part have curved inclined surfaces so that area of section increases as being close to the substrate part.

3. The lens member according to claim 1 or claim 2, wherein a tip surface of the light condensing part is provided integrally with a plurality of minute protrusions for diffusing light.

4. The lens member according to at least one of claims 1-3, wherein a plurality pairs of the light receiving part and the light condensing part are provided.

5. The lens member according to at least one of claims 1-4, a separating part is disposed integrally on the back surface of the substrate part between the neighboring light receiving parts.
